# DEMANDE DE BREVET EUROPEEN

(11) **EP 0 666 026 A1**
(43) Date de publication de la demande: **09.08.1995**
(21) Numéro de dépôt: 95400250.7
(22) Date de dépôt: 06.02.1995
(51) Int. Cl.: A01K 87/00

(54) **Dispositif d'accrochage d'hameçon et canne à pêche comprenant un tel dispositif**

(30) Priorité: 08.02.1994 FR 9401416
(71) Demandeur: DECATHLON, F-59650 Villeneuve d'Ascq (FR)
(72) Inventeur: Huynh, Olivier, F-59800 Lille (FR)
(74) Mandataire: Desaix, Anne

(57) **Abrégé**

Il s'agit d'un dispositif (1) d'accrochage pour hameçon de canne à pêche et d'une canne comportant un tel dispositif. Le dispositif comporte un corps (2) de révolution autour d'un axe (3), évidé de bout en bout par un alésage cylindrique (4) de passage de la tige de la canne. Le corps comprend une portion inférieure propre à être fixée à proximité de la poignée, et une portion supérieure (10) dont la paroi (11) est fendue longitudinalement, de part en part dans le sens transversal, sur une première distance déterminée d à partir de l'extrémité de la portion supérieure. La paroi (11) de la portion supérieure du corps présente une gorge circulaire externe (14) concentrique à l'axe (3) du corps, située axialement à une seconde distance déterminée d' inférieure à la première distance par rapport à l'extrémité du corps, et un anneau (15) agencé pour être inséré en force dans la gorge.

## Description

La présente invention concerne un dispositif d'accrochage pour hameçon de canne à pêche à proximité de la poignée de préhension de la canne, et une canne comprenant un tel dispositif.

Elle trouve une application particulièrement importante bien que non exclusive dans le domaine des cannes à pêche pour pêche dite "à la mouche", où le pêcheur se déplace régulièrement d'un emplacement à un autre afin de trouver le poisson. De tels déplacements nécessitent de maintenir ou de bloquer provisoirement l'hameçon fixé à la ligne afin d'éviter de l'accrocher dans la végétation environnante, voire dans les vêtements ou les doigts du pêcheur en mouvement.

On connaît déjà des dispositifs de protection d'hameçon qui vise à éviter les blessures provoquées par les pointes d'hameçon.

Le document FR-A-2.481.576 décrit par exemple un étui pour hameçon autorisant une telle protection, mais qui ne permet pas un accrochage sur la canne lors des déplacements du pêcheur.

On connaît également (FR-A-1.566.738) un dispositif de présentation d'hameçons évitant au pêcheur d'être encombré ou gêné dans ses mouvements lorsqu'il se déplace. Les hameçons sont fixés sur des portions de ligne amovibles accrochées au dispositif. Un tel dispositif présente cependant des inconvénients. Il nécessite en effet le montage de la portion de ligne amovible porteuse de l'hameçon sur le fil de la canne à chaque fois que l'on veut l'utiliser.

La présente invention vise à fournir un dispositif d'accrochage et une canne munie d'un tel dispositif répondant mieux que ceux antérieurement connus aux exigences de la pratique notamment en ce qu'elle permet de protéger la pointe de l'hameçon, sans démontage de la portion d'extrémité de la ligne, et ce tout en autorisant les déplacements du pêcheur d'un poste à l'autre sans risque d'accrochage de l'hameçon dans la végétation environnante.

Dans ce but l'invention propose essentiellement un dispositif d'accrochage pour hameçon de canne à pêche à proximité de la poignée de préhension de la canne, caractérisé en ce que il comporte un corps de révolution autour d'un axe, évidé de bout en bout par un alésage cylindrique de passage de la tige de la canne, ledit corps comprenant une portion inférieure propre à être fixée à proximité de la poignée, et une portion supérieure dont la paroi est fendue longitudinalement, de part en part dans le sens transversal, sur une première distance déterminée à partir de l'extrémité de ladite portion supérieure, la paroi de la portion supérieure du corps présentant de plus une gorge circulaire externe concentrique à l'axe du corps, située axialement à une seconde distance déterminée inférieure à ladite première distance par rapport à l'extrémité du corps, et un anneau agencé pour être inséré en force dans la gorge.

Il suffit alors de placer l'hameçon dans la fente et de le bloquer en pression sur l'anneau pour assurer la protection de la pointe et la fixation de l'hameçon, ce qui évite de l'accrocher lors d'un déplacement.

Avantageusement le corps est en deux parties, ou demi-coquilles, symétriques par rapport à l'axe, ce qui favorise le montage du dispositif sur la tige de la canne.

Dans un mode de réalisation avantageux, le corps est en forme de demi-olive. Il peut ainsi et notamment constituer l'élément de jonction entre la poignée et le cône en fibre constituant la tige de la canne ("blank" en terminologie anglosaxonne). Il remplace alors le système connu de bague en matériau élastomère.

Avantageusement l'extrémité de la portion supérieure du corps est fendue de part en part dans le sens transversal, sur toute la largeur du corps.

Ceci permet une plus grande élasticité de cette portion lors de l'emboîtage en force de l'anneau dans la gorge.

Dans ce cas l'hameçon peut également et indifféremment être fixé de part et d'autre de la poignée.

Dans un mode de réalisation avantageux l'anneau est constitué par une bague en matériau élastomère.

L'invention propose également une canne à pêche comportant un dispositif d'accrochage d'hameçon comprenant un corps de révolution autour d'un axe, évidé de bout en bout par un alésage cylindrique de passage de la tige de la canne, ledit corps étant assujetti et collé sur ladite tige à proximité de la partie supérieure de la poignée, ledit corps comprenant une portion supérieure munie d'une paroi fendue longitudinalement sur une première distance déterminée par rapport à l'extrémité de ladite portion, de part en part dans le sens transversal de la paroi, ladite paroi présentant une gorge externe circulaire concentrique à l'axe du corps, située à une seconde distance déterminée inférieure à ladite première distance par rapport à l'extrémité de la pièce, et un anneau inséré en force dans ladite gorge.

L'invention sera mieux comprise à la lecture de la description qui suit d'un mode particulier de réalisation donné à titre d'exemple non limitatif. La description se réfère aux dessins qui l'accompagnent dans lesquels :
- La figure 1 est une vue de dessus en perspective d'un mode de réalisation du dispositif selon l'invention, avant insertion de l'anneau dans la gorge du corps.
- La figure 2 est une vue latérale du corps du dispositif de la figure 1, selon la flèche II.
- La figure 3 est une vue de dessus du corps de la figure 2.
- La figure 4 est une vue latérale en coupe selon IV-IV de la figure 3.
- La figure 5 est une vue en perspective, schématique, d'une poignée de canne à pêche munie du dispositif de la figure 1.

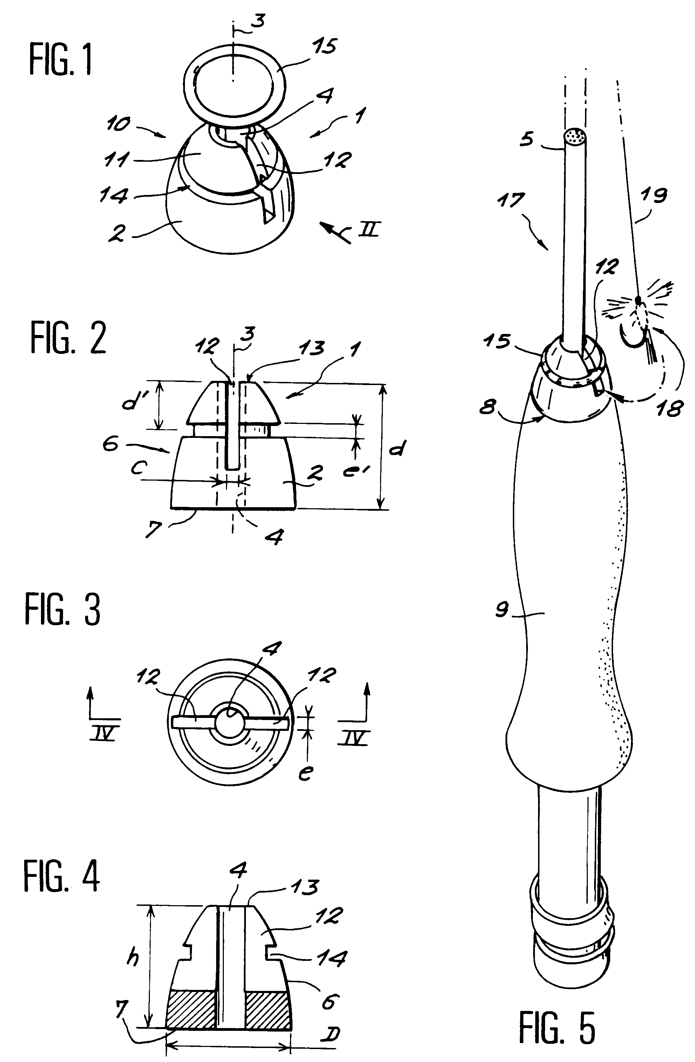

Les figures 1, 2, 3 et 4 montrent un dispositif 1 d'accrochage pour hameçon de canne à pêche comportant un corps 2 de révolution autour d'un axe 3 évidé de bout en bout par un alésage cylindrique 4 de passage de la tige de la canne 5 (voir figure 5).

L'alésage est agencé pour permettre l'insertion à frottement de la canne qui est de forme complémentaire audit alésage.

Le corps 2 est par exemple d'une seule pièce, en alliage d'aluminium. Il présente une forme générale de demi-olive comprenant une portion inférieure 6 terminée par une face plane 7 perpendiculaire à l'axe 3, de butée sur la partie supérieure 8 de la poignée de la canne (voir figure 5).

Le corps 2 comprend également une portion supérieure 10 dont la paroi 11 comporte une fente 12 d'épaisseur e. La fente est symétrique par rapport à un plan axial du corps et traverse de part en part ladite portion d'extrémité dans le sens transversal. La fente 12 s'étend par ailleurs dans le sens axial sur une première distance d déterminée à partir de l'extrémité 13 de la portion supérieure qui est par exemple inclue dans un plan perpendiculaire à l'axe 3.

La paroi 11 de la portion supérieure du corps présente également une gorge externe annulaire 14 de section sensiblement rectangulaire, concentrique à l'axe 3 du corps et d'épaisseur e', par exemple égale à e. Le plan médian de la gorge 14 est perpendiculaire à l'axe 3 et situé le long dudit axe, à une seconde distance déterminée d' par rapport à l'extrémité 13 du corps, inférieure à d, par exemple égale à d/2.

Le dispositif 1 comprend également un anneau 15 de diamètre interne égal, ou dans certains cas légèrement inférieur, à celui du fond 16 de la gorge, par exemple constitué par un anneau torique en matériau élastomère du type caoutchouc (auquel cas le diamètre interne de l'anneau peut effectivement être légèrement inférieur à celui du fond de gorge).

A titre d'exemple nullement limitatif, on a donné ci-après les dimensions d'un dispositif selon le mode de réalisation de l'invention plus particulièrement décrit ici :

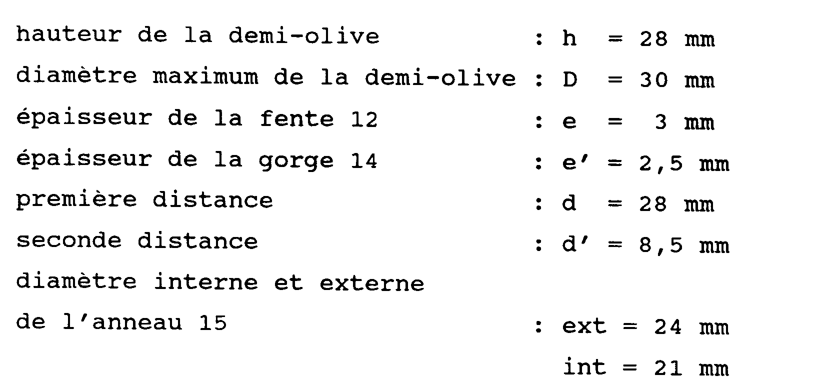

La figure 5 montre une canne à pêche 17 au niveau de sa poignée 9, qui comporte un dispositif 1 du type décrit ci-avant. L'hameçon 18, accroché à la ligne 19, est propre à être fixé sur l'anneau 15 après insertion dans la fente 12.

On va maintenant décrire le montage du dispositif plus particulièrement décrit ici, sur la tige de la canne.

On introduit tout d'abord en force l'anneau 15 sur le corps 2 du côté de la portion supérieure 10, jusqu'à insertion et blocage de l'anneau dans la gorge 14.

La présence de la fente 12 engendre l'élasticité nécessaire au montage.

Puis le dispositif est enfilé sur la tige 5 jusqu'à venir en butée contre le haut 8 de la poignée 9, la tige 5 et la face 7 ayant été préalablement encollées.

Le dispositif est alors opérationnel après séchage.

Comme il va de soi et comme il résulte d'ailleurs de ce qui précède, le dispositif selon l'invention ne se limite pas au mode de réalisation plus particulièrement décrit ici. Il en embrasse au contraire toutes les variantes rentrant dans le cadre des équivalences et notamment celles où l'anneau est en métal et celles où la fente n'est réalisée que sur une moitié de la paroi de la portion supérieure du corps.

## Revendications

1. Dispositif (1) d'accrochage pour hameçon (18) de canne à pêche à proximité de la poignée (9) de préhension de la canne, caractérisé en ce que il comporte
un corps (2) de révolution autour d'un axe (3), évidé de bout en bout par un alésage cylindrique (4) de passage de la tige (5) de la canne,
ledit corps comprenant une portion inférieure (6), propre à être fixée à proximité de la poignée, et une portion supérieure (10) dont la paroi (11) est fendue longitudinalement, de part en part dans le sens transversal, sur une première distance déterminée d à partir de l'extrémité (13) de ladite portion supérieure,
la paroi (11) de la portion supérieure du corps présentant de plus une gorge circulaire externe (14) concentrique à l'axe (3) du corps, située axialement à une seconde distance déterminée d' inférieure à ladite première distance par rapport à l'extrémité du corps,
et un anneau (15) agencé pour être inséré en force dans la gorge.

2. Dispositif selon la revendication 1, caractérisé en ce que le corps (2) est en deux parties symétriques par rapport à l'axe.

3. Dispositif selon l'une quelconque des revendications précédentes, caractérisé en ce que le corps (2) est sensiblement en forme de demi-olive.

4. Dispositif selon l'une quelconque des revendications précédentes, caractérisé en ce que l'extrémité (13) de la portion supérieure du corps est fendue de part en part dans le sens transversal sur toute la largeur du corps.

5. Dispositif selon l'une quelconque des revendications précédentes, caractérisé en ce que l'anneau est en matériau élastomère.

6. Canne à pêche, caractérisée en ce qu'elle comporte un dispositif (1) d'accrochage d'hameçon (18) comprenant
un corps (2) de révolution autour d'un axe (3), évidé de bout en bout par un alésage cylindrique (4) de passage de la tige (5) de la canne, ledit corps étant assujetti et collé sur ladite tige à proximité de la partie supérieure de la poignée, ledit corps comprenant une portion supérieure (10) munie d'une paroi (11) fendue longitudinalement sur une première distance déterminée d par rapport à l'extrémité (13) de ladite portion, de part en part dans le sens transversal de la paroi, et présentant une gorge externe (14) circulaire concentrique à l'axe du corps, située à une seconde distance déterminée d' inférieure à ladite première distance par rapport à l'extrémité (13) de la pièce,
et un anneau (15) inséré en force dans ladite gorge.

7. Canne à pêche selon la revendication 6, caractérisée en ce que le corps (2) étant sensiblement en forme de demi-olive, la portion supérieure (10) du corps est fendue de part en part dans le sens transversal sur toute la largeur du corps.
